# FASCICULE DE BREVET EUROPEEN

(11) **EP 1 719 652 B1**
(45) Date de publication et mention de la délivrance du brevet: **19.08.2015**
(21) Numéro de dépôt: 06356052.8
(22) Date de dépôt: 03.05.2006
(51) Int. Cl.: B60J 5/14, B60J 5/08, E06B 9/17

(54) **Dispositif de fermeture comprenant des éléments de fermeture articulés et véhicule automobile comprenant au moins un tel dispositif de fermeture**
Verschlussvorrichtung mit gelenkig verbundenen Verschlusselementen sowie ein Automobil mit zumindest einer solchen Verschlussvorrichtung
Closure device having jointed closure elements and vehicle having at least one such closure device

(30) Priorité: 03.05.2005 FR 0504494
(43) Date de publication de la demande: 08.11.2006
(73) Titulaire: Peugeot Citroën Automobiles SA, 78140 Vélizy-Villacoublay (FR); Megatech Industries Amurrio S.L., 01468 Amurrion/Alava (ES)
(72) Inventeur: Guinois, Pascal Gaston Yves, 91680 Bruyeres le Chatel (FR); Brocal, Sylvain, 90400 Dorans (FR); Gonzalez, Jesus, Guadalajara (ES)
(74) Mandataire: Ménès, Catherine

(56) Documents cités:
- EP-A- 1 270 297
- WO-A-02/08558
- DE-A1- 10 023 630
- DE-A1- 19 822 166
- DE-U1- 29 808 889
- US-A- 4 717 196

## Description

La présente invention concerne un dispositif de fermeture comprenant des éléments de fermeture articulés, ainsi qu'un véhicule automobile comprenant au moins un tel dispositif de fermeture, connu par exemple de EP-A-1 270 297.

Au sens de l'invention, un tel dispositif de fermeture est propre à obturer une ouverture, de manière sélective. L'invention vise plus particulièrement, mais non exclusivement, un dispositif de fermeture pour véhicule automobile. Dans ce cas, il s'agit par exemple d'un rideau de porte arrière, ou de porte latérale, ou bien encore d'un toit ouvrant. Cependant, ce dispositif de fermeture peut également être, à titre non limitatif, un volet, une grille ou un rideau destiné à équiper par exemple une construction.

L'invention a plus particulièrement trait à un tel dispositif de fermeture, qui comprend différents éléments de fermeture articulés deux à deux. Ces éléments de fermeture forment des lamelles, qui sont propres à coulisser, notamment par leurs bords latéraux, dans des glissières présentant par exemple une forme de U.
Ceci étant précisé, l'invention vise à proposer un dispositif de fermeture du type précité qui présente une étanchéité satisfaisante, notamment à l'égard de l'humidité et des poussières, plus particulièrement dans chaque zone d'articulation des lamelles, à savoir dans la région formée par les bords longitudinaux en regard de deux lamelles adjacentes, et de façon périphérique autour de l'ensemble des lamelles en réalisant la liaison avec le joint extérieur.

A cet effet, elle a pour objet un dispositif de fermeture de porte, tel qu'une grille, un rideau ou un volet, destiné à obturer de façon sélective une ouverture, ce dispositif de fermeture comportant plusieurs éléments de fermeture, en particulier des lamelles, articulés deux à deux, des bords longitudinaux de deux éléments de fermeture en regard définissant au moins une zone intermédiaire d'articulation, caractérisé en ce que la ou chaque zone d'articulation est associée à une feuille d'étanchéité, formant écran, qui recouvre en service une partie substantielle de cette zone d'articulation.

Selon d'autres caractéristiques de l'invention :
- il est prévu une unique feuille d'étanchéité, qui recouvre en service toutes les zones d'articulation du dispositif de fermeture ;
- la feuille d'étanchéité est réalisée en un matériau plastique, tel que du polyéthylène ou une mousse cellulaire ;
- la feuille d'étanchéité s'étend transversalement jusqu'au voisinage de moyens d'étanchéité latéraux, notamment d'un joint périphérique, dont est pourvu le dispositif de fermeture de fermeture ;
- à au moins une de ses extrémités latérales, la feuille d'étanchéité est pourvue d'un rebord coiffé par lesdits moyens d'étanchéité latéraux ;
- la ou chaque feuille d'étanchéité est fixée sur les éléments de fermeture délimitant la ou chaque zone d'articulation recouverte par cette feuille d'étanchéité ;
- chaque élément de fermeture comprend une peau, une doublure ainsi que des moyens de solidarisation, notamment au moins une vis, permettant de solidariser mutuellement cette peau et cette doublure, la ou chaque feuille d'étanchéité étant fixée sur un élément de fermeture correspondant par l'intermédiaire desdits moyens de solidarisation ;
- la ou chaque feuille d'étanchéité est fixée sur chaque élément de fermeture par collage ;
- ce dispositif de fermeture est un dispositif de fermeture de véhicule automobile, notamment un rideau de porte arrière ou de porte latérale, ou bien encore un toit ouvrant.

L'invention a également pour objet un véhicule automobile comprenant au moins un dispositif de fermeture tel que défini ci-dessus.

L'invention va être décrite ci-après, en référence aux dessins annexés, donnés uniquement à titre d'exemple non limitatif, dans lesquels .
- la figure 1 est une vue en coupe longitudinale, illustrant de manière partielle un dispositif de fermeture conforme à l'invention ; et
- la figure 2 est une vue en coupe transversale, illustrant le dispositif de fermeture de la figure 1 au voisinage d'un de ses bords latéraux.

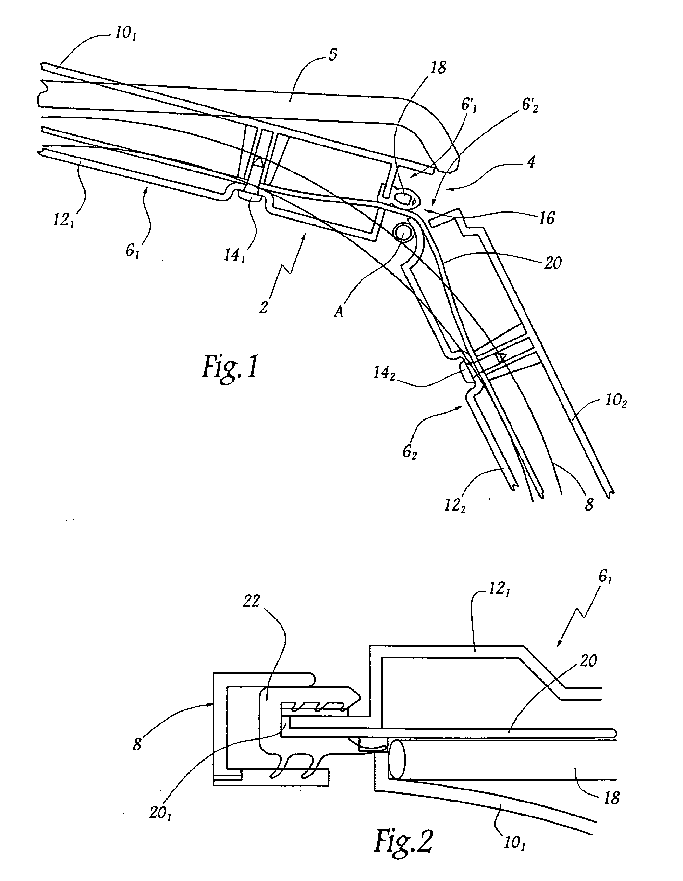

Dans l'exemple de réalisation, le dispositif de fermeture conforme à l'invention, représenté sur les figures 1 et 2, est un rideau pour porte arrière de véhicule automobile. Ce rideau, désigné dans son ensemble par la référence 2, est destiné à obturer une ouverture 4, ménagée dans la caisse 5 de ce véhicule automobile. Il comprend plusieurs lamelles, dont seules deux 6₁ et 6₂ sont représentées, qui forment des éléments de fermeture et sont articulées deux à deux.

Les moyens d'articulation correspondants sont de type connu en soi, de sorte qu'ils ne sont pas représentés sur les figures. On note uniquement A l'axe d'articulation entre les lamelles 6₁ et 6₂, qui est illustré sur la figure 1.

Les lamelles sont destinées à coulisser dans une glissière 8 en forme de U, plus particulièrement visible sur la figure 2, qui borde l'ouverture 4 précitée. Chaque lamelle 6₁ et 6₂ est formée d'une peau respective 10₁, 10₂, ainsi que d'une doublure respective 12₁, 12₂, de façon connue en soi. Chaque peau est fixée à une doublure correspondante, par l'intermédiaire d'une vis auto-porteuse 14₁, 14₂, qui est également de type classique.

On note par ailleurs 6'₁ et 6'₂ les bords longitudinaux des lamelles 6₁ et 6₂ en regard. Ces bords longitudinaux 6'₁ et 6'₂ définissent une zone intermédiaire d'articulation, notée 16, s'étendant au voisinage de l'axe d'articulation correspondant A.

De façon connue en soi, un joint tubulaire 18 est emmanché sur la peau de la lamelle 6₁, représentée à la partie supérieure de la figure 1. De plus, il est prévu une feuille d'étanchéité 20, qui recouvre notamment la zone d'articulation précitée 16.

A titre non limitatif, cette feuille d'étanchéité est par exemple réalisée en un matériau plastique, tel que du polyéthylène ou de la mousse cellulaire. Ce matériau plastique peut être livré en rouleau ou en pièces découpées, puis thermoformé à chaud sur une presse et enfin détouré si besoin avant assemblage.

De façon plus précise, comme le montre notamment la figure 1, la feuille 20 est fixée aux deux lamelles 6₁ et 6₂ par l'intermédiaire des vis auto-porteuses 14₁ et 14₂. Par ailleurs, au voisinage de l'extrémité longitudinale 6'₁, cette feuille est intercalée entre le joint tubulaire 18 et la doublure 12₁ en regard.

Enfin, au voisinage de l'autre extrémité longitudinale 6'₂, la feuille 20 est directement intercalée entre la peau 10₂ et la doublure 12₂. On notera qu'il peut être avantageux que cette feuille 20 ne soit pas tendue, notamment au voisinage de la zone d'articulation 16, de manière à pouvoir s'adapter aux composantes non linéaires des mouvements impartis aux lamelles 6₁ et 6₂.

De manière avantageuse, il est prévu une unique feuille d'étanchéité 20, qui s'étend sensiblement sur toute la dimension axiale du rideau 2, à savoir sur toute sa hauteur. Ainsi, cette même feuille recouvre l'ensemble des zones d'articulation du rideau, analogues à celle 16 de la figure 1, de sorte qu'elle relie les deux lamelles d'extrémité, situées en partie haute et basse lorsque le rideau est dans sa position de fermeture.

En référence désormais à la figure 2, l'extrémité latérale de la feuille 20 s'étend au-delà de l'extrémité du joint tubulaire 18, et possède un rebord 20₁, qui repose contre la paroi en regard de la doublure 12₁. Il est enfin prévu un joint périphérique 22, de type connu en soi, qui forme un moyen d'étanchéité latéral du rideau 2. Ce joint 22 coiffe à la fois l'extrémité latérale de la feuille 20, y compris son rebord 20₁, ainsi que les extrémités latérales de la peau 10₁ et de la doublure 12₁.

L'invention n'est pas limitée à l'exemple décrit et représenté.

Ainsi, les différentes lamelles, constitutives du dispositif de fermeture, peuvent être réalisées d'un seul tenant, et non pas comporter une peau et une doublure. Dans ce cas, la feuille d'étanchéité est fixée sur chaque lamelle par tout moyen approprié, par exemple par collage.

De plus, la feuille d'étanchéité peut présenter des dimensions transversales inférieures à celles de l'exemple décrit et représenté. En particulier, elle peut s'étendre uniquement jusqu'à l'extrémité du joint tubulaire, et non pas au-delà de celui-ci comme dans l'exemple.

Enfin, il est possible de prévoir plusieurs feuilles d'étanchéité, dont chacune présente des dimensions axiales inférieures à celles de l'exemple. Dans cette optique, chaque feuille relie uniquement deux lamelles adjacentes, en recouvrant en particulier la zone d'articulation formée par celles-ci.

L'invention permet de réaliser les objectifs précédemment mentionnés.

Ainsi, la présence d'une feuille formant écran, de manière à recouvrir la zone d'articulation entre deux lamelles, garantit une étanchéité satisfaisante. Cette feuille d'étanchéité empêche en effet, de manière efficace, toute pénétration, notamment d'eau et de poussières, au travers de la zone intermédiaire d'articulation précitée.

De plus, prévoir une unique feuille d'étanchéité est également avantageux, en particulier en termes de simplicité de fabrication. En effet, pour chaque dispositif de fermeture équipé conformément à l'invention, il s'agit de découper cette feuille unique à la longueur désirée, puis de la rapporter sur le dispositif de fermeture.

## Revendications

1. Dispositif de fermeture (2) destiné à obturer une ouverture (4) d'une façon étanche, notamment à l'égard de l'humidité et des poussières, comportant des moyens d'étanchéité latéraux (22) et plusieurs éléments de fermeture, en particulier des lamelles (6₁, 6₂), articulés deux à deux, des bords longitudinaux (6'₁, 6'₂) de deux éléments de fermeture en regard définissant au moins une zone intermédiaire d'articulation (16), **caractérisé en ce que** le dispositif de fermeture comporte de plus au moins une feuille d'étanchéité qui recouvre en service une partie substantielle d'une ou de toute les zones intermédiaires d'articulation, l'extrémité latérale de la feuille d'étanchéité (20) étant coiffée par les moyens d'étanchéité latéraux (22)

2. Dispositif de fermeture selon la revendication 1, **caractérisé en ce qu'**il est prévu une unique feuille d'étanchéité (20), qui recouvre en service toutes les zones d'articulation (16) du dispositif de fermeture (2).

3. Dispositif de fermeture selon la revendication 1 ou 2, **caractérisé en ce que** la feuille d'étanchéité (20) est réalisée en un matériau plastique, tel que du polyéthylène ou une mousse cellulaire.

4. Dispositif de fermeture selon l'une des revendications précédentes, **caractérisé en ce que**, à au moins une de ses extrémités latérales, la feuille d'étanchéité (20) est pourvue d'un rebord (20₁) coiffé par lesdits moyens d'étanchéité latéraux (22).

5. Dispositif de fermeture selon l'une des revendications précédentes, **caractérisé en ce que** la ou chaque feuille d'étanchéité (20) est fixée sur les éléments de fermeture (6₁, 6₂) délimitant la ou chaque zone d'articulation (16) recouverte par cette feuille d'étanchéité.

6. Dispositif de fermeture selon la revendication 5, **caractérisé en ce que** chaque élément de fermeture (61, 62) comprend une peau (10₁, 10₂), une doublure (12₁, 12₂) ainsi que des moyens de solidarisation, notamment au moins une vis (14₁, 14₂), permettant de solidariser mutuellement cette peau et cette doublure, la ou chaque feuille d'étanchéité (20) étant fixée sur un élément de fermeture correspondant par l'intermédiaire desdits moyens de solidarisation (14₁, 14₂).

7. Dispositif de fermeture selon la revendication 5, **caractérisé en ce que** la ou chaque feuille d'étanchéité est fixée sur chaque élément de fermeture par collage.

8. Dispositif de fermeture selon une des revendications précédentes, **caractérisé en ce que** ce dispositif de fermeture est un dispositif de fermeture de véhicule automobile, notamment un rideau (2) de porte arrière ou de porte latérale, ou bien encore un toit ouvrant.

9. Véhicule automobile comprenant au moins un dispositif de fermeture (2) conforme à l'une quelconque des revendications précédentes.

## Patentansprüche

1. Verschlussvorrichtung (2), die dazu bestimmt ist, eine Öffnung (4) dicht zu verschließen, insbesondere gegen Feuchtigkeit und Staub, die seitliche Abdichtmittel (22) und mehrere Verschlusselemente umfasst, insbesondere Lamellen (6₁, 6₂), die in Paaren angelenkt sind, wobei Längsränder (6'₁, 6'₂) von zwei gegenüberliegenden Verschlusselementen mindestens eine Zwischenanlenkzone (16) definieren, **dadurch gekennzeichnet, dass** die Verschlussvorrichtung außerdem mindestens ein Abdichtblatt umfasst, das beim Betrieb einen wesentlichen Teil einer oder jeder Zwischenanlenkzone abdeckt, wobei auf dem seitlichen Ende des Abdichtblatts (20) seitliche Abdichtmittel (22) sitzen.

2. Verschlussvorrichtung nach Anspruch 1, **dadurch gekennzeichnet, dass** ein einziges Abdichtblatt (20), das beim Betrieb alle Anlenkzonen (16) der Verschlussvorrichtung (2) abdeckt, vorgesehen ist.

3. Verschlussvorrichtung nach Anspruch 1 oder 2, **dadurch gekennzeichnet, dass** das Abdichtblatt (20) aus einem Kunststoff hergestellt ist, wie zum Beispiel aus Polyethylen oder einem Zellschaumstoff.

4. Verschlussvorrichtung nach einem der vorhergehenden Ansprüche, **dadurch gekennzeichnet, dass** das Abdichtblatt (20) an mindestens einem seiner seitlichen Enden mit einem Rand (20₁), auf dem die seitlichen Abdichtmittel (22) sitzen, versehen ist.

5. Verschlussvorrichtung nach einem der vorhergehenden Ansprüche, **dadurch gekennzeichnet, dass** das oder jedes Abdichtblatt (20) auf den Verschlusselementen (6₁, 6₂), die die oder jede Anlenkzone (16), die durch dieses Abdichtblatt abgedeckt ist, abgrenzen, befestigt ist.

6. Verschlussvorrichtung nach Anspruch 5, **dadurch gekennzeichnet, dass** jedes Verschlusselement (6₁, 6₂) eine Haut (10₁, 10₂), ein Futter (12₁, 12₂) sowie Mittel zum festen Verbinden umfasst, insbesondere mindestens eine Schraube (14₁, 14₂), die es erlaubt, diese Haut und dieses Futter aneinander fest zu verbinden, wobei das oder jedes Abdichtblatt (20) auf einem entsprechenden Verschlusselement über die Mittel zum festen Verbinden (14₁, 14₂) befestigt ist.

7. Verschlussvorrichtung nach Anspruch 5, **dadurch gekennzeichnet, dass** das oder jedes Abdichtblatt auf jedem Verschlusselement durch Kleben befestigt ist.

8. Verschlussvorrichtung nach einem der vorhergehenden Ansprüche, **dadurch gekennzeichnet, dass** diese Verschlussvorrichtung eine Automobilverschlussvorrichtung ist, insbesondere ein Vorhang (2) einer Hecktür oder Seitentür oder auch eines Schiebedachs.

9. Automobil, das mindestens eine Verschlussvorrichtung (2) nach einem der vorhergehenden Ansprüche umfasst.

## Claims

1. A closure device (2) intended to close off an opening (4) in a sealed manner, in particular with regard to humidity and dust, comprising lateral sealing means (22) and a plurality of closure elements, in particular blades (6₁, 6₂), articulated in pairs, of the longitudinal edges (6'₁, 6'₂) of two opposite closure elements defining at least one intermediate articulation zone (16), **characterized in that** the closure device further comprises at least one sealing sheet which covers in operation a substantial portion of one or of all the intermediate articulation zones, the lateral end of the sealing sheet (20) being capped by the lateral sealing means (22).

2. The closure device according to claim 1, **characterized in that** a single sealing sheet (20) is provided, which covers, in operation, all the articulation zones (16) of the closure device (2).

3. The closure device according to claim 1 or 2, **characterized in that** the sealing sheet (20) is made from a plastic material, such as polyethylene or a cellular foam.

4. The closure device according to one of the preceding claims, **characterized in that**, at at least one of its lateral ends, the sealing sheet (20) is provided with a rim (20₁) capped by the said lateral sealing means (22).

5. The closure device according to one of the preceding claims, **characterized in that** the or each sealing sheet (20) is fixed on the closure elements (6₁, 6₂) delimiting the or each articulation zone (16) covered by this sealing sheet.

6. The closure device according to claim 5, **characterized in that** each closure element (6₁, 6₂) includes a skin (10₁, 10₂), a lining (12₁, 12₂) and attachment means, in particular at least one screw (14₁, 14₂), permitting this skin and this lining to be mutually attached, the or each sealing sheet (20) being fixed on a corresponding closure element by means of the said attachment means (14₁, 14₂) .

7. The closure device according to claim 5, **characterized in that** the or each sealing sheet is fixed on each closure element by bonding.

8. The closure device according to one of the preceding claims, **characterized in that** this closure device is a closure device of a motor vehicle, in particular a blind (2) of a rear door or side door, or else an opening roof.

9. A motor vehicle including at least one closure device (2) according to any one of the preceding claims.
